# EUROPÄISCHE PATENTSCHRIFT

(11) **EP 2 002 221 B1**
(45) Veröffentlichungstag und Bekanntmachung des Hinweises auf die Patenterteilung: **31.03.2010**
(21) Anmeldenummer: 07711842.0
(22) Anmeldetag: 08.03.2007
(51) Int. Cl.: G01D 11/30, F15B 15/28

(54) **SENSOR UND DAMIT AUSGESTATTETES ARBEITSGERÄT**
SENSOR AND WORKING MACHINE EQUIPPED WITH THE LATTER
CAPTEUR ET APPAREIL DE TRAVAIL EQUIPE DE CELUI-CI

(30) Priorität: 06.04.2006 DE 202006005609 U
(43) Veröffentlichungstag der Anmeldung: 17.12.2008
(73) Patentinhaber: FESTO AG & Co. KG, 73734 Esslingen (DE)
(72) Erfinder: KIESSLING, Albert, 71263 Weil der Stadt (DE); SCHNEIDER, Heidemarie, 73230 Kirchheim/Teck (DE); SCHÜTTE, Manfred, 73779 Deizisau (DE); WELKER, Florian, 73061 Ebersbach (DE)
(74) Vertreter: Abel, Martin
(86) Internationale Anmeldenummer: PCT/EP2007/001980
(87) Internationale Veröffentlichungsnummer: WO 2007/115619

(56) Entgegenhaltungen:
- DE-U1- 9 414 869
- DE-U1- 20 211 518
- JP-A- 2001 280 310
- US-A1- 2004 212 952

## Beschreibung

Die Erfindung betrifft einen in einer stufenförmig hinterschnittenen Verankerungsnut fixierbaren Sensor, insbesondere Positionssensor, mit einem länglichen Sensorgehäuse, das in einem Abstand zu seinen beiden Stirnflächen mindestens eine zur Oberseite und zu den beiden Seitenflächen offene Aussparung aufweist, in der eine um eine mit der Hochachse des Sensorgehäuses gleichgerichtete Drehachse verdrehbare Klemmeinheit angeordnet ist, die ein Klemmteil mit zwei sich diametral gegenüberliegenden Klemmflügeln und ein zur Drehbetätigung des Klemmteils dienendes Betätigungsteil aufweist, wobei das Klemmteil durch Verdrehen des Betätigungsteils zwischen einer mit seinen Klemmflügeln bezüglich der beiden Seitenflächen des Sensorgehäuses ausgefahrenen Klemmstellung und einer diesbezüglich weiter eingefahrenen Lösestellung bewegbar ist. Die Erfindung betrifft ferner eine Arbeitsvorrichtung, die ein mit mindestens einem solchen Sensor ausgestattetes Arbeitsgerät, beispielsweise einen fluidbetätigten Linearantrieb, enthält.

Ein Stand der Technik dieser Art geht aus der DE 20211518 U1 hervor. Der dort beschriebene Sensor enthält ein Sensorgehäuse mit einer im Wesentlichen mittigen Aussparung, in der eine ein Klemmteil und ein Betätigungsteil definierende einstückige Klemmeinheit verdrehbar aufgenommen ist. Das Klemmteil hat sich diametral gegenüberliegende Klemmflügel, an denen radial nach außen orientierte Klemmflächen mit exzentrischem Verlauf ausgebildet sind. Die Fixierung des Sensors in einer Verankerungsnut erfolgt dadurch, dass die Klemmeinheit mittels eines Werkzeuges verdreht wird, sodass die zuvor in einer eingefahrenen Lösestellung befindlichen Klemmflügel zur Seite hin ausgefahren und unter Einnahme der Klemmstellung mit den gegenüberliegenden Nutflanken der Verankerungsnut verspannt werden. Zwar lässt sich der Sensor auf diese Weise relativ sicher verankern. Unter Umständen verbleibt jedoch ein gewisses Bewegungsspiel zwischen dem die Sensormittel enthaltenden Sensorgehäuse und der mit der Verankerungsnut ausgestatteten Gerätekomponente. Dies kann bei ungünstigen Betriebsbedingungen, beispielsweise bei Vibrationen, Fehlfunktionen hervorrufen.

Die DE 9414869 U1 beschreibt eine Anordnung, bei der ein Sensor unter anderem mittels einer stirnseitig angebrachten zweiteiligen Klemmeinheit in einer Verankerungsnut fixierbar ist. Die Klemmeinheit besitzt ein drehbewegliches Klemmteil und ein mit diesem in Gewindeeingriff stehendes Betätigungsteil. Durch Verdrehen des Betätigungsteils kann das Klemmteil in eine den Nuthals untergreifende Klemmstellung verlagert werden, wobei gleichzeitig das Betätigungsteil mit dem Nutgrund verspannt wird. Da das Sensorgehäuse hiermit allein nicht sicher festgehalten wird, ist am entgegengesetzten Endbereich des Sensorgehäuses eine zusätzliche Rastverbindungseinrichtung vorgesehen, was jedoch den Herstellungsaufwand vergrößert.

Eine ähnliche Anordnung, jedoch ohne Rastverbindungseinrichtung und ohne verschwenkbares Klemmteil, ist auch im Patent Abstract of Japan bezüglich der JP 2001280310 A beschrieben.

Gemäß der DE 196 48 679 C2 wird ein Sensor mit einer Verankerungsnut durch ein nicht verdrehbares Klemmteil fixiert, das aus zwei Fortsätzen besteht, die mittels eines Spreizkörpers auseinanderspreizbar sind, der durch eine Schraube verstellbar ist.

Eine aus der DE 102 31 481 B3 beschriebene Befestigungsvorrichtung für einen Sensor enthält ein durch Verdrehen betätigbares einstückiges Klemmteil, das mit Längsrippen einer Befestigungsnut verspannbar ist. Im Falle der DE 203 12 472 U1 enthält eine Befestigungsvorrichtung für einen Sensor zwei federelastische Klemmbügel, die mittels eines Betätigungsstößels auseinandergedrückt werden, um sich in einer Befestigungsnut zu verspannen.

Aus der DE 199 30 020 A1 ist ein Linearantrieb bekannt, bei dem ein Rohrkörper durch einen Verschlussstopfen verschlossen ist, der durch einen Sicherungsstift verankert ist.

Der vorliegenden Erfindung liegt die Aufgabe zugrunde, Maßnahmen vorzuschlagen, die eine einfache und sichere lösbare Fixierung eines Sensors in einer stufenförmig hinterschnittenen Verankerungsnut ermöglichen.

Zur Lösung dieser Aufgabe ist bei einem Sensor der eingangs genannten Art vorgesehen, dass das Klemmteil und das Betätigungsteil zwei separate, bezüglich der Drehachse relativ zueinander verdrehbare Bauteile sind, die miteinander in Gewindeeingriff stehen, wobei das Betätigungsteil am Sensorgehäuse ohne Gewindeeingriff drehbar gelagert und gleichzeitig nach unten abgestützt ist, ohne über eine von der Unterseite des Sensorgehäuses gebildete, zur Abstützung am Nutgrund der Verankerungsnut dienende Abstützfläche hinauszuragen.

Die Aufgabe wird ferner gelöst durch eine Arbeitsvorrichtung, die ein Arbeitsgerät mit zwei relativ zueinander bewegbaren Gerätekomponenten umfasst, wobei die eine Gerätekomponente mindestens eine stufenförmig hinterschnittene Verankerungsnut aufweist, in der mindestens ein erfindungsgemäßer Sensor lösbar verankert ist, wobei die andere Gerätekomponente mindestens ein zur berührungslosen Betätigung des Sensors geeignetes Betätigungselement trägt. Bei dem Arbeitsgerät handelt es sich beispielsweise um einen fluidbetätigten Linearantrieb.

Erfindungsgemäß ist bei aktivierter Klemmeinheit nicht nur diese in der Verankerungsnut verspannt, sondern zugleich auch das Sensorgehäuse. Das Klemmteil drückt von unten her gegen die Hinterschnittstufen der Verankerungsnut, wobei gleichzeitig das Sensorgehäuse durch das dieses beaufschlagende Betätigungsteil mit seiner Abstützfläche gegen den Nutgrund der Verankerungsnut gedrückt wird.

Die Handhabung der Befestigungsmittel kann insbesondere so ablaufen, dass das Klemmteil bei einer Drehbetätigung des Betätigungsteils zunächst aufgrund der Gewindereibung des Gewindeeingriffs mitgenommen und aus der Lösestellung in eine durch Anschlagmittel vorgegebene Zwischenstellung seitwärts ausgefahren wird, in der es die Hinterschnittstufen der Verankerungsnut untergreift. Beim anschließenden Weiterdrehen des Betätigungsteils schraubt sich das Klemmteil nach oben bis in die Klemmstellung zur Anlage an den Hinterschnittstufen. Beginnend mit dem Kontakt zwischen dem Klemmteil und den Hinterschnittstufen wird das Sensorgehäuse über das Betätigungsteil in die Verankerungsnut hinein und gegen den Nutgrund vorgespannt. Das Lösen der Verankerung findet zweckmäßigerweise durch einen entgegengesetzten Bewegungsablauf statt.

Die die Ausfahrbewegung des Klemmteils begrenzenden Anschlagmittel können von den Nutflanken der Verankerungsnut gebildet sein. Vorzugsweise sind sie jedoch unmittelbarer Bestandteil des Sensors selbst, wobei sie sich zweckmäßigerweise am Sensorgehäuse befinden und beispielsweise von der Begrenzungsfläche der Aussparung gebildet sind.

Zur Vorgabe der Lösestellung sind zweckmäßigerweise ebenfalls am Sensorgehäuse angeordnete Anschlagmittel vorhanden, die wirksam sind, wenn das Klemmteil in Richtung der Lösestellung zurückgedreht wird.

Die Unteransprüche definieren noch weitere vorteilhafte Ausgestaltungen der Erfindung.

Vorzugsweise ist die Klemmeinheit durch Zusammenwirken mit dem Sensorgehäuse an diesem verliersicher gehalten. Hierzu kann die Aussparung des Sensorgehäuses einen das Klemmteil aufnehmenden Aufnahmeabschnitt aufweisen sowie einen sich daran zur Oberseite des Sensorgehäuses hin anschließenden offenen Halsabschnitt, in den das Betätigungsteil hineinragt. Der Halsabschnitt ist in seinem Querschnitt so ausgebildet, dass das Klemmteil nicht hindurchgeführt werden kann. Außerdem ist der Querschnitt des Halsabschnittes so an den in ihn eingreifenden Abschnitt des Betätigungsteils angepasst, dass das Betätigungsteil in der Querrichtung des Sensorgehäuses gefangen ist.

Zweckmäßigerweise ragt das Betätigungsteil unter Gewindeeingriff koaxial in das Klemmteil hinein. Dabei wird das Klemmteil von dem Betätigungsteil zweckmäßigerweise durchgriffen. Dies erlaubt eine besonders einfache stirnseitige Abstützung des Betätigungsteils.

Um eine besonders einfache Drehlagerung der gesamten Klemmeinheit zu erzielen, kann das Betätigungsteil an seiner dem Grund der Aussparung zugewandten unteren Stirnseite eine Lagerausnehmung aufweisen, die drehbar auf einen nach oben ragenden gehäuseseitigen Lagerzapfen aufgesteckt ist. Verglichen mit einer prinzipiell ebenfalls möglichen Bauweise, bei der das Betätigungsteil seinerseits einen nach unten in die Wandung des Sensorgehäuses eintauchenden Lagerzapfen aufweist, können hierdurch besonders niedrige Höhenabmessungen des Sensorgehäuses verwirklicht werden. Somit können die Sensoren auch zum Einbau in Verankerungsnuten mit relativ kleinem Nutquerschnitt bereitgestellt werden.

Im Innern des Sensorgehäuses befinden sich die eigentlichen Sensormittel, beispielsweise magnetoresistive Sensormittel oder ein sogenannter Reed-Schalter. Diese Sensormittel werden zweckmäßigerweise von einer im Innern des Sensorgehäuses untergebrachten Platine getragen, beispielsweise eine Leiterplatte. Die Realisierung geringer Querabmessungen des Sensors wird hierbei begünstigt, wenn die Platine hochkant ausgerichtet ist, also mit zur Hochachse und zur Längsachse des Sensorgehäuses paralleler Platinenebene. Die Platine kann insbesondere durch Rastverbindungsmittel im Innern des Sensorgehäuses fixiert sein.

Es empfiehlt sich, die Sensormittel und den Kabelabgang des Sensors einander entgegengesetzten Endbereichen des Sensorgehäuses zuzuordnen. Dadurch können die Sensormittel ohne Behinderung durch ein abgehendes Kabel auch sehr nahe vor einer Wand platziert werden. In diesem Fall ist es von Vorteil, wenn sich die Platine mit einem schmalen Platinenstegabschnitt durch den zwischen der Aussparung und der Abstützfläche befindlichen Zwischenbereich hindurch erstreckt und sich beidseits an diesen Platinenstegabschnitt je ein Platinenendabschnitt anschließt, der in Richtung der Hochachse größere Abmessungen als der Platinenstegabschnitt aufweisen kann, wobei der eine Platinenendabschnitt die Sensormittel und der andere Platinenendabschnitt die Anschlusskontakte für die nach außen führenden elektrischen Leiter aufweist.

Zweckmäßigerweise enthält das Sensorgehäuse einen haubenartigen Gehäusehauptkörper, der die Platine einschließlich der daran angeordneten Komponenten aufnimmt und der zum anderen von einer ebenfalls als Gehäusebestandteil fungierenden ausgehärteten Vergussmasse ausgefüllt ist. Die Abstützfläche für den Nutgrund kann hierbei von der Vergussmasse gebildet sein.

Nachfolgend wird die Erfindung anhand der beiliegenden Zeichnung näher erläutert. In dieser zeigen:

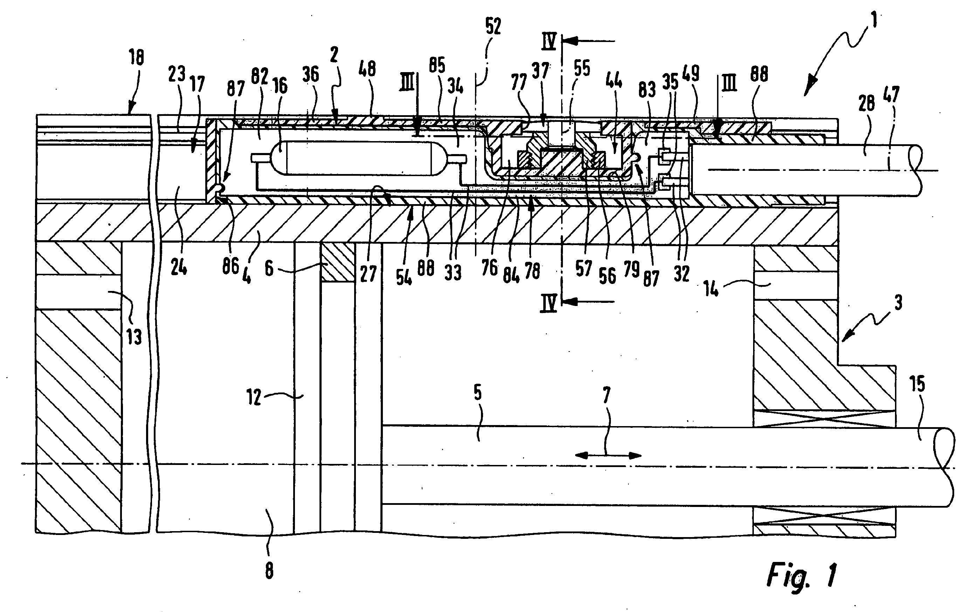

- Figur 1: eine sich aus einem Arbeitsgerät in Gestalt eines fluidbetätigten Linearantriebes und einem Sensor bevorzugten erfindungsgemäßen Aufbaus zusammenset- zende Arbeitsvorrichtung in einer Teildarstellung und im Längsschnitt gemäß Schnittlinie I-I aus Fi- gur 3,
- Figur 2: eine perspektivische Einzeldarstellung des Sensors,
- Figur 3: einen Ausschnitt der Anordnung aus Figur 1 im Längsschnitt gemäß Schnittlinie III-III mit in Klemmstellung befindlichem Klemmteil, wobei ergän- zend strichpunktiert die Lösestellung des Klemm- teils angedeutet ist, und
- Figur 4: einen Querschnitt gemäß Schnittlinie IV-IV aus Fi- guren 1 und 3, wobei das Klemmteil strichpunktiert bei Einnahme der Klemmstellung und in durchgezoge- nen Linien, wie auch in Figur 1, in der ausgefahre- nen, von den Hinterschnittstufen noch abgerückten Zwischenstellung abgebildet ist.

Die insgesamt mit Bezugsziffer 1 bezeichnete Arbeitsvorrichtung enthält ein mit mindestens einem Sensor 2 bestücktes Arbeitsgerät 3. Der mindestens eine Sensor 2 ist an einer ersten (4) von zwei relativ zueinander bewegbaren Gerätekomponenten 4, 5 befestigt und wird bei einer vorbestimmten Relativposition dieser beiden Komponenten 4, 5 durch ein an der zweiten Gerätekomponente 5 angeordnetes Betätigungselement 6 berührungslos aktiviert. Die Relativbewegung der beiden Gerätekomponenten 4, 5 ist zweckmäßigerweise eine Linearbewegung.

Bei dem Arbeitsgerät 3 handelt es sich insbesondere um ein Antriebsgerät, vorzugsweise einer durch Fluidkraft betätigten Art. Exemplarisch handelt es sich um einen fluidbetätigten Linearantrieb, insbesondere in Gestalt eines Arbeitszylinders. Hierbei ist die erste Gerätekomponente 4 vom Gehäuse des Linearantriebes gebildet und die zweite Gerätekomponente 5 ist eine diesbezüglich gemäß Doppelpfeil 7 linear verschiebliche Abtriebseinheit, die einen in einem Innenraum 8 des Gehäuses 4 aufgenommenen Abtriebskolben 12 umfasst.

Der Abtriebskolben 12 unterteilt den Innenraum 8 in zwei Arbeitskammern, die über je einen Fluidkanal 13, 14 gesteuert mit Druckmedium beaufschlagbar sind, um den Abtriebskolben 12 und mithin die gesamte Abtriebseinheit 5 zu der Linearbewegung veranlassen zu können. Ein ebenfalls zu der Abtriebseinheit 5 gehörendes, mit dem Abtriebskolben 12 bewegungsgekoppeltes Kraftabgriffsteil 15, vorliegend in Gestalt einer stirnseitig aus dem Gehäuse 4 herausragenden Kolbenstange, ermöglicht außerhalb des Gehäuses 4 einen Kraftabgriff, beispielsweise zur Betätigung eines nicht näher abgebildeten Maschinenelementes.

Das Betätigungselement 6 ist so ausgebildet, dass es Sensormittel 16 des Sensors 2 berührungslos betätigen kann, wenn es diesbezüglich eine bestimmte Relativposition einnimmt, insbesondere eine Position radial innerhalb. Dementsprechend ist der Sensor 2 so angeordnet, dass die Sensormittel 16 mit geringem Abstand längsseits neben der Bewegungsbahn des Betätigungselementes 6 platziert sind. Bei dem Betätigungselement 6 handelt es sich zweckmäßigerweise um eine Permanentmagneteinrichtung, beispielsweise einen am Abtriebskolben 12 angeordneten permanentmagnetischen Ringmagnet. Die Sensormittel 16 sind vorzugsweise von magnetoresistiven Sensormitteln oder von einem sogenannten Reed-Schalter gebildet.

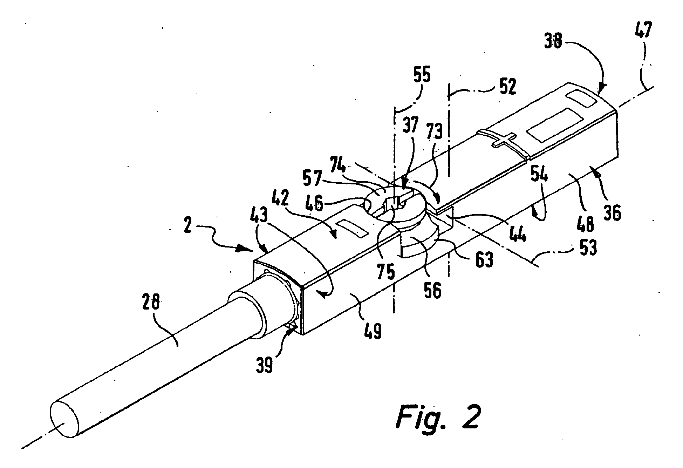

Der in Figur 2 in Alleinstellung abgebildete Sensor 2 ist ausgebildet, um in einer stufenförmig hinterschnittenen Verankerungsnut 17 der ersten Gerätekomponente 4 durch Klemmung lösbar fixierbar zu sein. Die erste Gerätekomponente 4 ist mit einer oder mehreren solcher Verankerungsnuten 17 ausgestattet, die einen linearen Verlauf haben und sich parallel zu der Linearbewegungsrichtung 7 erstrecken. In jeder solchen Verankerungsnut 17 können ein oder mehrere Sensoren 2 fixiert sein, um entweder nur eine oder mehrere Relativpositionen zwischen den beiden Gerätekomponenten 4, 5 zu erfassen.

Die Verankerungsnut 17 ist unmittelbar in der ersten Gerätekomponente 4 ausgebildet und in deren Außenfläche 18 eingelassen. Sie erstreckt sich vorzugsweise über die gesamte Baulänge der ersten Gerätekomponente 4, wobei sie an ihren beiden Stirnseiten vorzugsweise offen ist und an ihrer von der ersten Gerätekomponente 4 wegweisenden Längsseite eine schlitzartige Nutöffnung 22 aufweist. Das Einsetzen und Entnehmen des Sensors 2 in die beziehungsweise aus der Verankerungsnut 17 ist beim Ausführungsbeispiel durch die schlitzartige Nutöffnung hindurch möglich und kann somit auch dann erfolgen, wenn die Verankerungsnut 17 stirnseitig aufgrund des momentanen Anwendungsfalles des Arbeitsgerätes 3 nicht zugänglich ist.

Es sei an dieser Stelle erwähnt, dass sich die Verankerungsnut 17 nicht unmittelbar an der ersten Gerätekomponente 4 befinden muss. Sie kann auch Bestandteil einer anderen Trägereinrichtung sein, beispielsweise einer an der ersten Gerätekomponente 4 festlegbaren Halterung.

Die Verankerungsnut 17 enthält zweckmäßigerweise einen sich unmittelbar an die Außenfläche 18 anschließenden, die schlitzartige Nutöffnung 22 bildenden Nuthals 23, an den sich über zwei Hinterschnittstufen 24 ein breiterer Verankerungsabschnitt 25 anschließt. Auf diese Weise ergibt sich ein in der Tiefenrichtung der Verankerungsnut 17 abgestufter Verlauf der beiden längsseitigen Nutflanken 26, wobei sich die Hinterschnittstufen 25 jeweils über die gesamte Nutlänge erstrecken.

Bei der Verankerungsnut 17 handelt es sich zweckmäßigerweise um eine sogenannte T-Nut mit im Wesentlichen T-ähnlichem Querschnitt. Der Verankerungsabschnitt 25 hat dabei insgesamt einen quadratischen oder rechteckigen Querschnitt.

Die Verankerungsnut 17 besitzt außerdem eine als Nutgrund 27 bezeichnete, dem Nuthals 23 in der Nut-Tiefenrichtung gegenüberliegende Grundfläche, die vorzugsweise eben ist.

Der Sensor 2 kann über ein von ihm abgehendes elektrisches Kabel 28 mit einer nicht näher dargestellten Steuer-, Anzeige- und/oder Auswerteeinrichtung verbunden werden. Das elektrische Kabel 28 umfasst mehrere elektrische Leiter 32, die innerhalb des Sensors 2 mit den Sensormitteln 16 in elektrischer Verbindung stehen. Letzteres geschieht zweckmäßigerweise mittels im Innern des Sensors 2 verlaufender elektrischer Leiterzüge 33 auf einer Platine 34, beispielsweise einer Leiterplatte. Die Platine 34 trägt auch die Sensormittel 16 und ist mit bevorzugt padartigen Anschlusskontakten 35 versehen, an denen die elektrischen Leiter 32 elektrisch leitend angebracht sind, beispielsweise durch Anlöten oder durch Ankleben mittels eines Leitklebers.

Die Sensormittel 16 befinden sich, wie auch die gesamte Platine 34 und die anderen daran angeordneten Komponenten, im Innern des als Sensorgehäuse 36 bezeichneten, eine längliche Gestalt aufweisenden Gehäuses des Sensors 2. Der Sensor 2 kann derart in der Verankerungsnut 17 platziert werden, dass er in dieser komplett aufgenommen ist und mithin auch das Sensorgehäuse 36 nicht über die schlitzartige Nutöffnung 22 hinaus vorsteht. Zur ortsfesten Fixierung innerhalb der Verankerungsnut 17 trägt das Sensorgehäuse 36 eine insgesamt mit Bezugsziffer 37 bezeichnete Klemmeinheit, unter deren Mitwirkung der Sensor 2 innerhalb der Verankerungsnut 17 mit der Nutwandung kraftschlüssig verspannbar ist.

Die Klemmeinheit 37 sitzt in einer zur Oberseite 42 und zu den beiden den Nutflanken 26 zugewandten Seitenflächen 43 offenen Aussparung 44 des Sensorgehäuses 36. Zweckmäßigerweise gehen die seitlichen Öffnungen der Aussparung 44 ununterbrochen in die an der Oberseite 42 befindliche obere Öffnung 46 der Aussparung 44 über. In Richtung der Längsachse 47 des Sensorgehäuses 36 ist die Aussparung 44 auf beiden Seiten von je einem Gehäuse-Längenabschnitt 48, 49 flankiert und begrenzt.

Das Kabel 28 geht zweckmäßigerweise von der rückwärtigen Stirnfläche 39 des Sensorgehäuses 36 ab. Die ihm zugeordneten Anschlusskontakte 35 befinden sich vorzugsweise im Innern des sich anschließenden rückwärtigen Gehäuse-Längenabschnittes 49. Die Sensormittel 16 sind zweckmäßigerweise in dem der vorderen Stirnfläche 38 zugeordneten vorderen Gehäuse-Längenabschnitt 48 untergebracht.

Das Sensorgehäuse 36 hat eine zur Längsachse 47 rechtwinkelige Hochachse 52. Bei in der Verankerungsnut 17 fixiertem Sensor 2 verläuft die Hochachse 52 gleichgerichtet mit der Nut-Tiefenrichtung und somit insbesondere auch rechtwinkelig zum Nutgrund 27. Die Querachse 53 des Sensorgehäuses 36 verläuft rechtwinkelig zur sowohl der Längsachse 47 als auch der Hochachse 52.

Die im in die Verankerungsnut 17 eingesetzten Zustand dem Nutgrund 27 zugewandte Unterseite des Sensorgehäuses 36 bildet eine bevorzugt ebene Abstützfläche 54, die am Nutgrund 27 anliegen und sich daran in der Nut-Tiefenrichtung abstützen kann.

Die Klemmeinheit 37 ist um eine mit der Hochachse 52 des Sensorgehäuses 36 gleichgerichtete Drehachse 55 relativ zum Sensorgehäuse 36 verdrehbar. Dabei setzt sich die Klemmeinheit 37 aus zwei separaten Bauteilen zusammen, die beide, unabhängig voneinander, um die Drehachse 55 verdrehbar sind. Diese Bauteile sind ein Klemmteil 56 und ein mit diesem in Gewindeeingriff stehendes Betätigungsteil 57.

Das Klemmteil 56 besitzt einen Zentralabschnitt 58, der mittig von einer Innengewindebohrung 62 durchsetzt ist und von dem an sich diametral gegenüberliegenden Stellen zwei Klemmflügel 63, bezüglich der Drehachse 55 radial, wegragen. Das Betätigungsteil 57 greift mit einem ein Außengewinde aufweisenden Schaftabschnitt 64 durch die Innengewindebohrung 62 des Klemmteils 56 hindurch, wobei der schon erwähnte Gewindeeingriff vorliegt. Mit seiner nach unten, in Richtung der Abstützfläche 54 weisenden Stirnfläche 65 stützt sich das Betätigungsteil 57 an der Bodenfläche 66 der Aussparung 44 nach unten hin ab.

Ein ausgehend von dieser Bodenfläche 66 in Richtung der oberen Öffnung 46 nach oben ragender, mit dem Sensorgehäuse 36 bevorzugt einstückiger zylindrischer Lagerzapfen 67 taucht in eine zu der Stirnfläche 65 hin offene, ebenfalls zylindrische Lagerausnehmung 68 des Betätigungsteils 57 ein. Die Längsachsen der Lagerausnehmung 68 und des Lagerzapfens 67 fallen mit der Drehachse 55 zusammen. Außerdem sind die Durchmesser dieser Komponenten 67, 68 so aufeinander abgestimmt, dass das Betätigungsteil 57 um die Drehachse 55 relativ zum Sensorgehäuse 36 verdrehbar bleibt, wobei die ineinander eingreifenden Komponenten 67, 68 die dafür verantwortliche Drehlagereinrichtung bilden.

Die Gewindeverbindung zwischen dem Befestigungsteil 57 und dem Klemmteil 56 ist ausreichend reibungsbehaftet, um bei einer Drehbetätigung des Betätigungsteils 57 eine Drehmitnahme des Klemmteils 56 zu gewährleisten, solange dieses nicht von in seine Drehbewegungsbahn ragenden Anschlagmitteln an einer entsprechend gerichteten Drehbewegung gehindert wird. Ist das Klemmteil 56 an einer Drehbewegung gehindert, bewirkt die gleichzeitige Drehbetätigung des Betätigungsteils 57 aufgrund des hierbei auftretenden Schraubvorganges eine Verlagerung des Klemmteils 56 längs der Hochachse 52, und zwar entsprechend der Drehrichtung des Betätigungsteils 57 nach oben oder unten. Da zwischen dem Betätigungsteil 57 und dem Sensorgehäuse 36 kein Gewindeeingriff vorliegt, bleibt deren Relativposition in Richtung der Hochachse 52 stets die gleiche.

Bedingt durch die geschilderte Anordnung ist außerdem gewährleistet, dass das Betätigungsteil 57 ungeachtet seiner momentan eingenommenen Drehposition nie nach unten über die Abstützfläche 54 des Sensorgehäuses 36 hinausragen kann.

Zweckmäßigerweise bildet das Sensorgehäuse 36 unmittelbar selbst die erwähnten, in die Drehbewegungsbahn des Klemmteils 56 ragenden Anschlagmittel 69. Sie sind zweckmäßigerweise von zwei Vorsprüngen gebildet, die je einer der beiden Seitenflächen 43 zugeordnet sind und dort in die seitliche Öffnung 45 hineinragen. Zweckmäßigerweise liegen sie sich bezüglich der Drehachse 55 diametral gegenüber. Der eine Vorsprung ragt vom vorderen Gehäuse-Längenabschnitt 48, der andere Vorsprung vom rückwärtigen Gehäuse-Längenabschnitt 49 weg.

Diese Anschlagmittel 69 sind jeweils bei beiden Drehrichtungen des Klemmteils 56 wirksam. Sie kooperieren dabei mit den Klemmflügeln 63. Letztere laufen bei der einen Drehrichtung auf den jeweils einen und bei der anderen Drehrichtung auf den jeweils anderen Vorsprung auf.

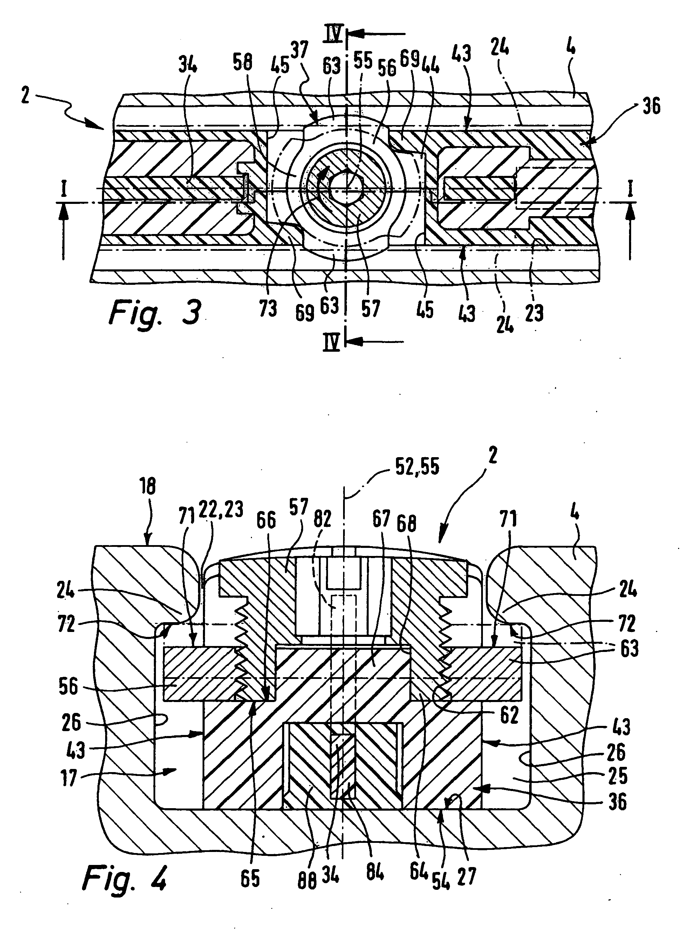

Die Aussparung 44 hat in Richtung der Längsachse 47 eine ausreichend große Länge, um das gesamte Klemmteil 56 aufzunehmen, wenn dieses eine in Figur 3 strichpunktiert angedeutete Lösestellung einnimmt. Die Klemmflügel 63 nehmen hierbei eine bezüglich des Sensorgehäuses 36 eingefahrene Stellung ein, in der sie zweckmäßigerweise nicht über die Seitenflächen 43 des Sensorgehäuses 36 hinausragen. Dadurch kann der Sensor 2 bei in Lösestellung befindlichem Klemmteil 56 ungehindert durch den Nuthals 23 hindurch eingesetzt oder entnommen werden. Die zwischen den beiden Seitenflächen 43 gemessene Breite des Sensorgehäuses 36 ist in der Regel nur geringfügig kleiner als die Breite des Nuthalses 23.

In der Lösestellung nimmt das Klemmteil 56 außerdem eine bezüglich des Betätigungsteils 57 abgesenkte, der Bodenfläche 66 der Aussparung 44 angenäherte oder daran anliegende Position ein. In dieser Position liegen die nach oben, in Richtung des Nuthalses 23 weisenden Klemmflächen 71 tiefer in der Verankerungsnut 17 als die dem Nutgrund 27 zugewandten inneren Stufenflächen 72 der Hinterschnittstufen 24. Diese Gegebenheiten sind in Figur 4 in Verbindung mit dem in durchgezogenen Linien abgebildeten Klemmteil 56 gut ersichtlich.

Um den in die Verankerungsnut 17 eingesetzten Sensor 2 festzuklemmen, wird das Betätigungsteil 57 manuell, und bei Bedarf unter Zuhilfenahme eines geeigneten Werkzeuges, in einer durch einen Pfeil angedeuteten Klemmrichtung 73 verdreht. Um das Ansetzen eines Werkzeuges zu ermöglichen, verfügt das Betätigungsteil 57 an seinem nach oben weisenden, im Bereich der Oberseite 42 angeordneten oberen Endabschnitt 74 über eine Werkzeugangriffskontur 75, beispielsweise in Gestalt eines Schlitzes und/oder eines Innenmehrkants.

Bei dem in der Klemmrichtung 73 erfolgenden Verdrehen des Betätigungsteils 57 wird zunächst das Klemmteil 56 mitgenommen, wobei die beiden Klemmflügel 63 auf entgegengesetzten Längsseiten des Sensorgehäuses 36 aus den seitlichen Öffnungen 45 rotativ ausfahren und in eine ausgefahrene Zwischenstellung gelangen, in der sie die Hinterschnittstufen 24 - Letztere sind in Figur 3 nur strichpunktiert angedeutet - innerhalb des Verankerungsabschnittes 25 untergreifen. Diese Zwischenstellung ist in Figuren 3 und 4 in durchgezogenen Linien gezeigt, und man erkennt, dass hier noch ein gewisser Höhenabstand zwischen den Klemmflächen 71 und den inneren Stufenflächen 72 vorhanden ist. Die Ausfahrbewegung des Klemmteils 56 wird durch den Kontakt zwischen den Klemmflügeln 63 und den Anschlagmitteln 69 gestoppt. Um den Klemmvorgang zu beenden, wird jedoch das Betätigungsteil 57 weiter in der Klemmrichtung 73 verdreht, was zur Folge hat, dass das seinerseits an einer weiteren Drehbewegung gehinderte Klemmteil 56 aufgrund des Gewindeeingriffes auf dem Schaftabschnitt 64 nach oben wandert, bis es schließlich mit seinen Klemmflügeln 63 an den den Nuthals 23 definierenden Hinterschnittstufen 24 zur Anlage gelangt. Durch festes Anziehen des Betätigungsteils 57 mit einem ausreichend hohen Drehmoment wird hier erreicht, dass die Klemmflügel 63 mit ihren Klemmflächen 71 gegen die inneren Stufenflächen 72 vorgespannt werden, während gleichzeitig das Betätigungsteil 57 durch den Kontakt zwischen seiner unteren Stirnfläche 65 und der Bodenfläche 66 nach unten gegen das Sensorgehäuse 36 drückt und dieses mit seiner Abstützfläche 54 gegen den Nutgrund 27 spannt. Auf diese Weise ist das Sensorgehäuse 36 zuverlässig festgeklemmt und verändert auch bei Vibrationen seine Relativlage bezüglich der ersten Gerätekomponente 4 nicht.

Das Lösen der Klemmverbindung geschieht durch einen umgekehrten Betätigungsablauf. Man verdreht das Betätigungsteil 57 entgegen der Klemmrichtung 73, wobei sich zunächst die Vorspannung bezüglich der Wandung der Verankerungsnut 17 löst, indem das Klemmteil 56 geringfügig absinkt. Sobald die zwischen den Klemmflügeln 63 und den Hinterschnittstufen 24 vorhandene Reibung nicht mehr ausreicht, um das Klemmteil 56 zu blockieren, macht dieses aufgrund der Gewindereibung die Rückdrehbewegung des Betätigungsteils 57 mit, bis seine Klemmflügel 63 wieder in die Aussparung 44 eingefahren und durch Kontakt mit den Anschlagmitteln 69 in dieser eingefahrenen Stellung blockiert werden. Nun kann das Sensorgehäuse 36 zusammen mit dem gesamten Sensor 2 entnommen werden.

Solange die beiden Komponenten 56, 57 miteinander in Gewindeeingriff stehen, ist die gesamte Klemmeinheit 37 am Sensorgehäuse 36 verliersicher gehalten. Dies hängt beim Ausführungsbeispiel damit zusammen, dass die Aussparung 44 in einen ausgehend von der Oberseite 42 tiefer liegenden, durch das Klemmteil 56 belegten Aufnahmeabschnitt 76 und einen sich daran anschließenden, zu der Oberseite 42 ausmündenden Halsabschnitt 77 mit im Vergleich zum Umriss des Klemmteils 56 reduziertem Querschnitt aufweist, das Ganze bei Betrachtung in Richtung der Drehachse 55. Der Halsabschnitt 77 verhindert also aufgrund seiner Kontur ein nach oben erfolgendes Herausheben des Klemmteils 56 und somit auch des damit in Gewindeeingriff stehenden Betätigungsteils 57.

Damit die Klemmeinheit 77 auch nicht seitlich aus der Aussparung 44 herauskippen kann, sind außerdem die Höhenabmessungen des Betätigungsteils 57 so gewählt, dass es mit seinem oberen, bevorzugt kopfartigen Endabschnitt 74 in den Halsabschnitt 77 hineinragt, wobei die in Richtung der Längsachse 47 gemessene Breite des Halsabschnittes 77 zu den Seitenflächen 43 hin auf ein Maß verengt ist, das kleiner ist als der Durchmesser des bevorzugt kreisrund konturierten oberen Endabschnittes 74. Somit ist das Betätigungsteil 57 in Richtung der Querachse 53 in dem Halsabschnitt 77 gefangen. Eine Entnahme der Klemmeinheit 37 ist nur möglich, wenn diese durch Herausschrauben des Betätigungsteils 57 in ihre Komponenten zerlegt wird.

Zweckmäßigerweise hat der Halsabschnitt 77 im Bereich des oberen Endabschnittes 74 des Betätigungsteils 57 einen dessen Umfangsverlauf entsprechenden Konturverlauf, der bei kreisförmig konturiertem oberem Endabschnitt 74 kreisbogenförmig konvex ausgebildet ist. Dadurch ergibt sich auch eine weitere Führung des Betätigungsteils 57, zusätzlich zu den Eingriffsmaßnahmen zwischen dem Lagerzapfen 67 und der Lagerausnehmung 68.

Um in der Querrichtung schmale Abmessungen des Sensorgehäuses 36 zu ermöglichen, ist die Platine 34 im Innern des Sensorgehäuses 36 hochkant ausgerichtet. Ihre Platinenebene erstreckt sich also sowohl in Richtung der Längsachse 47 als auch in Richtung der Hochachse 52. Dies ist unter anderem aus Figur 4 gut ersichtlich.

Aufgrund der Aussparung 44 besitzt der Innenraum des Sensorgehäuses 36 zwischen der Bodenfläche 66 der Aussparung 44 und der dieser gegenüberliegenden Abstützfläche 54 nur geringe Höhenabmessungen. Gleichwohl erstreckt sich die Platine 34 zweckmäßigerweise auch durch diesen Zwischenbereich 78 hindurch.

Um dies zu ermöglichen, verfügt die Platine 34 an einem Randbereich über eine Aussparung 79. Dies führt dazu, dass die Platine 34 in zwei in Richtung der Längsachse 47 diesseits und jenseits der Aussparung 44 liegende Platinenendabschnitte 82, 83 und einen diese verbindenden schmäleren Platinenstegabschnitt 84 unterteilt ist. Der eine, erste Platinenendabschnitt 82 trägt die Sensormittel 16 und liegt innerhalb des vorderen Gehäuse-Längenabschnittes 48. Der andere, zweite Platinenendabschnitt 83 trägt die Anschlusskontakte 35 und liegt im rückwärtigen Gehäuse-Längenabschnitt 49. Der Platinenstegabschnitt 84 durchsetzt den Zwischenbereich 78, und zwar vorzugsweise unmittelbar unterhalb des Zentrums des Betätigungsteils 57, sodass die Drehachse 55 durch ihn hindurchgeht. Die beispielsweise in Gestalt von Leiterbahnen ausgeführten Leiterzüge 33 können die Aussparung 44 auf dem Platinenstegabschnitt 84 problemlos und auf engstem Raum passieren.

Aufgrund der Aussparung 79 haben die beiden Platinenendabschnitte 82, 83, in Richtung der Hochachse 52 gemessen, eine größere Höhe als der Platinenstegabschnitt 84. Sie stellen daher ausreichend Fläche zur Installation der Sensormittel 16 und der elektrischen Leiter 32 zur Verfügung.

Bevorzugt können die beiden Platinenendabschnitte 82, 83 so weit nach oben ragen, dass sie die Aussparung 44 in der Längsrichtung des Sensorgehäuses 36 flankieren.

Um eine besonders einfache Herstellung zu ermöglichen, enthält das Sensorgehäuse 36 zweckmäßigerweise einen die Oberseite 42, die beiden Seitenflächen 43 und die beiden Stirnflächen 38, 39 definierenden haubenartigen Gehäusehauptkörper 85. In diesen wird die mit allen Komponenten bestückte und bereits an die elektrischen Leiter 32 angeschlossene Platine 34 durch die an der Unterseite befindliche Gehäuseöffnung 86 hindurch eingesetzt. Einerseits an der Platine 34 und andererseits innen an der Wandung des Gehäusehauptkörpers 85 angeordnete Rastmittel 87 ermöglichen eine sichere Verankerung der Platine 34. Zusätzliche, nicht näher dargestellte gehäuseseitige Führungselemente gewährleisten die gewünschte Hochkantausrichtung der Platine 34. Im derart bestückten Zustand wird der Innenraum des Gehäusehauptkörpers 85 mit einer Vergussmasse 88 ausgegossen, beispielsweise ein Heißkleber, die anschließend aushärtet und zusammen mit dem Gehäusehauptkörper 85 das Sensorgehäuse 36 bildet. Die Abstützfläche 54 kann ganz oder teilweise von der Vergussmasse 88 gebildet sein.

Der in den Gehäusehauptkörper 85 hineinragende Endabschnitt des Kabels 28 ist ebenfalls in die Vergussmasse 88 eingebettet, wobei die hieraus resultierende stoffschlüssige Verbindung eine Zugentlastungsmaßnahme bezüglich des Kabels 28 bewirkt.

Der Gehäusehauptkörper 85 besteht zweckmäßigerweise aus Kunststoffmaterial und kann durch Spritzgießen hergestellt sein. Die Klemmeinheit 37 besteht vorzugsweise aus Metall.

## Patentansprüche

1. In einer stufenförmig hinterschnittenen Verankerungsnut fixierbarer Sensor (2), insbesondere Positionssensor, mit einem länglichen Sensorgehäuse (36), das in einem Abstand zu seinen beiden Stirnflächen (38, 39) mindestens eine zur Oberseite (42) und zu den beiden Seitenflächen (43) offene Aussparung (44) aufweist, in der eine um eine mit der Hochachse (52) des Sensorgehäuses (36) gleichgerichtete Drehachse (55) verdrehbare Klemmeinheit (37) angeordnet ist, die ein Klemmteil (56) mit zwei sich diametral gegenüberliegenden Klemmflügeln (63) und ein zur Drehbetätigung des Klemmteils (56) dienendes Betätigungsteil (57) aufweist, wobei das Klemmteil (56) durch Verdrehen des Betätigungsteils (57) zwischen einer mit seinen Klemmflügeln (63) bezüglich der beiden Seitenflächen (43) des Sensorgehäuses (36) ausgefahrenen Klemmstellung und einer diesbezüglich weiter eingefahrenen Lösestellung bewegbar ist, **dadurch gekennzeichnet, dass** das Klemmteil (56) und das Betätigungsteil (57) zwei separate, bezüglich der Drehachse (55) relativ zueinander verdrehbare Bauteile sind, die miteinander in Gewindeeingriff stehen, wobei das Betätigungsteil (57) am Sensorgehäuse (36) ohne Gewindeeingriff drehbar gelagert und gleichzeitig nach unten abgestützt ist, ohne über eine von der Unterseite des Sensorgehäuses (36) gebildete, zur Abstützung am Nutgrund (27) der Verankerungsnut (17) dienende Abstützfläche (54) hinauszuragen.

2. Sensor nach Anspruch 1, **dadurch gekennzeichnet, dass** am Sensorgehäuse (36) in die Drehbewegungsbahn des Klemmteils (56) ragende Anschlagmittel (69) vorhanden sind, die dem Klemmteil (56) die in der Klemmstellung bezüglich des Sensorgehäuses (36) eingenommene Drehwinkelstellung vorgeben.

3. Sensor nach Anspruch 1 oder 2, **dadurch gekennzeichnet, dass** am Sensorgehäuse (36) in die Drehbewegungsbahn des Klemmteils ragende Anschlagmittel (69) vorhanden sind, die dem Klemmteil (56) die in der Lösestellung bezüglich des Sensorgehäuses (36) eingenommene Drehwinkelstellung vorgeben.

4. Sensor nach Anspruch 2 oder 3, **dadurch gekennzeichnet, dass** die Anschlagmittel (69) von in die Aussparung (44) hineinragenden Vorsprüngen gebildet sind.

5. Sensor nach einem der Ansprüche 1 bis 4, **dadurch gekennzeichnet, dass** die Klemmeinheit (37) durch Zusammenwirken mit dem Sensorgehäuse (36) an diesem verliersicher gehalten ist.

6. Sensor nach einem der Ansprüche 1 bis 5, **dadurch gekennzeichnet, dass** die Aussparung (44) einen das Klemmteil (56) aufnehmenden Aufnahmeabschnitt (76) aufweist sowie einen sich daran anschließenden, zur Oberseite (42) des Sensorgehäuses (36) ausmündenden Halsabschnitt (77), in den das Betätigungsteil (57) hineinragt, wobei der Halsabschnitt (77) einen das Hindurchführen des Klemmteils (56) in Richtung der Hochachse (52) verhindernden Querschnitt aufweist, der zudem so gestaltet ist, dass das Betätigungsteil (57) darin in der Querrichtung des Sensorgehäuses (36) gefangen ist.

7. Sensor nach einem der Ansprüche 1 bis 6, **dadurch gekennzeichnet, dass** das Betätigungsteil (57) unter Gewindeeingriff koaxial in das Klemmteil (56) hineingreift und sich mit seiner Stirnfläche (65) am Grund der Aussparung (44) abstützt, wobei es Zweckmäßigerweise das Klemmteil (56) unter Gewindeeingriff koaxial durchsetzt.

8. Sensor nach einem der Ansprüche 1 bis 7, **dadurch gekennzeichnet, dass** das Betätigungsteil (57) an seiner unteren Stirnseite eine Lagerausnehmung (68) aufweist, in die ein am Sensorgehäuse (36) angeordneter, nach oben ragender Lagerzapfen (67) eintaucht, wobei das Betätigungsteil (57) auf dem Lagerzapfen (67) drehbar gelagert ist.

9. Sensor nach einem der Ansprüche 1 bis 8, **dadurch gekennzeichnet, dass** im Innern des Sensorgehäuses (36) eine die Sensormittel (16) des Sensors (2) tragende Platine (34) untergebracht ist.

10. Sensor nach Anspruch 9, **dadurch gekennzeichnet, dass** die Platine (34) hochkant ausgerichtet ist, wobei sich ihre Platinenebene sowohl in Richtung der Längsachse (47) als auch in Richtung der Hochachse (52) des Sensorgehäuses (36) erstreckt.

11. Sensor nach Anspruch 9 oder 10, **dadurch gekennzeichnet, dass** sich die Platine (34) durch den zwischen der Aussparung (44) und der Abstützfläche (54) befindlichen Zwischenbereich (78) hindurch erstreckt, wobei sie Zweckmäßigerweise den Zwischenbereich (78) unmittelbar unterhalb des Zentrums des Betätigungsteils (57) durchsetzt.

12. Sensor nach Anspruch 11, **dadurch gekennzeichnet, dass** die Platine (34) zwei in Längsrichtung des Sensorgehäuses (36) diesseits und jenseits der Aussparung (44) angeordnete Platinenendabschnitte (82, 83) aufweist, die über einen den Zwischenbereich (78) durchsetzenden Platinenstegabschnitt (84) miteinander verbunden sind, wobei der Platinenstegabschnitt (84) in Richtung der Hochachse (52) eine geringere Ausdehnung hat als wenigstens einer und zweckmäßigerweise beide Platinenendabschnitte (82, 83).

13. Sensor nach Anspruch 12, **dadurch gekennzeichnet, dass** eine oder beide der Platinenendabschnitte (82, 83) so weit nach oben ragen, dass sie die Aussparung (44) in Längsrichtung des Sensorgehäuses (36) flankieren.

14. Sensor nach Anspruch 12 oder 13, **dadurch gekennzeichnet, dass** einer der Platinenendabschnitte (82) die Sensormittel (16) trägt, die über auf dem Platinenstegabschnitt (84) verlaufende Leiterzüge (33) mit an dem anderen Platinenendabschnitt (83) vorgesehenen Anschlusskontakten (35) verbunden sind, an die nach außen führende elektrische Leiter (32) angeschlossen sind.

15. Sensor nach einem der Ansprüche 9 bis 14, **dadurch gekennzeichnet, dass** das Sensorgehäuse (36) einen haubenartigen Gehäusehauptkörper (85) aufweist, der die Platine (34) und die daran angeordneten Komponenten (16, 35) aufnimmt und der mit einer die Platine (34) umschließenden ausgehärteten Vergussmasse (88) ausgefüllt ist, wobei die Platine (34) Zweckmäßigerweise durch Rastverbindungsmittel (87) im Gehäusehauptkörper (85) gehalten ist.

16. Sensor nach einem der Ansprüche 1 bis 15, **dadurch gekennzeichnet, dass** die Sensormittel (16) des Sensors (2) mindestens einen Reed-Schalter oder magnetoresistive Sensormittel enthalten.

17. Arbeitsvorrichtung, mit einem Arbeitsgerät (3), das zwei relativ zueinander bewegbare Gerätekomponenten (4, 5) aufweist, von denen die eine Gerätekomponente (4) mindestens eine stufenförmig hinterschnittene Verankerungsnut (17) aufweist, in der mindestens ein gemäß einem der Ansprüche 1 bis 16 ausgestalteter Sensor (2) lösbar fixiert ist, wobei die andere Gerätekomponente (5) mindestens ein zur berührungslosen Betätigung des Sensors (2) geeignete Betätigungselement trägt.

18. Arbeitsvorrichtung nach Anspruch 17, **dadurch gekennzeichnet, dass** das Arbeitsgerät (3) ein fluidbetätigter Linearantrieb ist.

## Claims

1. Sensor (2), in particular a position sensor, able to be fixed in a step-shaped undercut anchoring slot, with an oblong sensor casing (36) which has at a distance from its two end faces (38, 39) at least one recess (44) open to the top (42) and to the two side faces (43) and in which is mounted a clamping unit (37), rotatable around a rotation axis (55) aligned with the vertical axis (52) of the sensor casing (36), which has a clamping element (56) with two diametrically opposite clamping arms (63) and an actuating element (57) provided for rotary actuation of the clamping element (56), wherein the clamping element (56) may be moved by rotating the actuating element (57) between a clamping position with its clamping arms (63) extended relative to the two side faces (43) of the sensor casing (36), and a release position in which it is again retracted in this respect, **characterised in that** the clamping element (56) and the actuating element (57) are two separate components, rotatable relative to one another with regard to the rotation axis (55) and in threaded engagement with one another, wherein the actuating element (57) is mounted rotatably on the sensor casing (36) without threaded engagement and is simultaneously supported from below, without extending beyond a support face (54) providing support on the slot base (27) of the anchoring slot (17) and formed by the underside of the sensor casing (36).

2. Sensor according to claim 1, **characterised in that** stop means (69) extending into the rotary movement path of the clamping element (56) are provided on the sensor casing (36) and preset for the clamping element (56) the rotation angle position relative to the sensor casing (36) which is assumed in the clamping position.

3. Sensor according to claim 1 or 2, **characterised in that** stop means (69) extending into the rotary movement path of the clamping element (56) are provided on the sensor casing (36) and preset for the clamping element (56) the rotation angle position relative to the sensor casing (36) which is assumed in the release position.

4. Sensor according to claim 2 or 3, **characterised in that** the stop means (69) are formed by projections extending into the recess (44).

5. Sensor according to any of claims 1 to 4, **characterised in that** the clamping unit (37) is held captive to the sensor casing (36) through interaction with it.

6. Sensor according to any of claims 1 to 5, **characterised in that** the recess (44) has a locating section (76) accommodating the clamping element (56), together with an adjacent neck section (77) opening out towards the top (42) of the sensor casing (36) and into which the actuating element (57) extends, wherein the neck section (77) has a cross-section preventing the clamping element (56) from being fed through in the direction of the vertical axis (52) and which is also so designed that the actuating element (57) is held captive in it in the transverse direction of the sensor casing (36).

7. Sensor according to any of claims 1 to 6, **characterised in that** the actuating element (57) under threaded engagement reaches coaxially into the clamping element (56) and is supported by its end face (65) on the base of the recess (44), wherein it expediently passes coaxially through the clamping element (56) under threaded engagement.

8. Sensor according to any of claims 1 to 7, **characterised in that** the actuating element (57) has on its lower end face a bearing recess (68) into which rises an upwards extending journal pin (67) mounted on the sensor casing (36), wherein the actuating element (57) is mounted rotatably on the journal pin (67).

9. Sensor according to any of claims 1 to 8, **characterised in that** a printed circuit board (34) carrying the sensor means (16) of the sensor (2) is accommodated inside the sensor casing (36).

10. Sensor according to claim 9, **characterised in that** the printed circuit board (34) is aligned on edge, with its printed circuit board plane extending both in the direction of the longitudinal axis (47) and also in the direction of the vertical axis (52) of the sensor casing (36).

11. Sensor according to claim 9 or 10, **characterised in that** the printed circuit board (34) extends through the intermediate area (78) between the recess (44) and the support face (54), wherein expediently it passes through the intermediate area (78) directly below the centre of the actuating element (57).

12. Sensor according to claim 11, **characterised in that** the printed circuit board (34) has two printed circuit board end sections (82, 83) located in the axial direction of the sensor casing (36) on either side of the recess (44) and connected to one another via a printed circuit board web section (84) passing through the intermediate area (78), wherein the printed circuit board web section (84) has a lesser extent in the direction of the vertical axis (52) than at least one and expediently both printed circuit board end sections (82, 83).

13. Sensor according to claim 12, **characterised in that** one or both of the printed circuit board end sections (82, 83) extend(s) so far upwards that it or they flank the recess (44) in the axial direction of the sensor casing (36).

14. Sensor according to claim 12 or 13, **characterised in that** one of the printed circuit board end sections (82) carries the sensor means (16), which are connected via conductor paths (33) running on the printed circuit board web section (84) to connection contacts (35) provided on the other printed circuit board end section (83), to which conductors (32) leading to the outside are connected.

15. Sensor according to any of claims 9 to 14, **characterised in that** the sensor casing (36) has a hood-like casing main body (85) which accommodates the printed circuit board (34) and the components (16, 35) mounted thereon and which is filled with a cured sealing compound (88) surrounding the printed circuit board (34), wherein the printed circuit board (34) is expediently held in the casing main body (85) by snap-in connection means (87).

16. Sensor according to any of claims 1 to 15, **characterised in that** the sensor means (16) of the sensor (2) contain at least one reed switch or magneto-resistive sensor means.

17. Operating device with an operating unit (3) which has two unit components (4, 5) movable relative to one another, of which one unit component (4) has at least one step-shaped undercut anchoring slot (17) in which at least one sensor (2) designed in accordance with any of claims 1 to 16 is fixed releasably, while the other unit component (5) carries at least one actuating element suitable for non-contact actuation of the sensor (2).

18. Operating device according to claim 17, **characterised in that** the operating unit (3) is a fluid-actuated linear drive.

## Revendications

1. Capteur (2), en particulier capteur de position, pouvant se fixer dans une rainure d'ancrage en contre-dépouille en forme de gradin, avec un boîtier de capteur (36) oblong qui présente, à distance de ses deux faces frontales (38, 39), au moins un évidement (44) ouvert en direction de la face supérieure (52) et des deux faces latérales (43), évidement dans lequel est placée une unité de blocage (37) pouvant être tournée autour d'un axe de rotation (55) orienté de la même manière que l'axe de hauteur (52) du boîtier de capteur (36), unité qui présente une partie de blocage (55) avec deux ailes de blocage (63) diamétralement opposées et une partie d'actionnement (57) servant à actionner en rotation la partie de blocage (56), la partie de blocage (56) pouvant être déplacée par rotation de la partie d'actionnement (57) entre une position de blocage sortie avec ses ailes de blocage (63) par rapport aux deux faces latérales (43) du boîtier de capteur (36) et une position de libération rentrée par rapport à celle-ci, **caractérisé en ce que** la partie de blocage (56) et la partie d'actionnement (57) sont deux composants séparés pouvant tourner l'un par rapport à l'autre part rapport à l'axe de rotation (55), qui sont en prise filetée l'un avec l'autre, la partie d'actionnement (57) étant montée rotative sans prise filetée sur le boîtier de capteur (36) et étant simultanément soutenue vers le bas, sans former saillie par rapport à une surface d'appui (54) formée depuis la face inférieure du boîtier de capteur (36) et servant au soutien contre le fond de rainure de la rainure d'ancrage (17).

2. Capteur selon la revendication 1, **caractérisé en ce que** sur le boîtier de capteur (36) se trouvent des moyens de butée (69) formant saillie dans la trajectoire de rotation de la partie de blocage (56), moyens qui imposent à la partie de blocage (56) la position angulaire de rotation occupée dans la position de blocage par rapport au boîtier de capteur (36).

3. Capteur selon la revendication 1 ou 2, **caractérisé en ce que** sur le boîtier de capteur (36) se trouvent des moyens de butée (69) formant saillie dans la trajectoire de rotation de la partie de blocage, moyens qui imposent à la partie de blocage (56) la position angulaire de rotation occupée dans la position de libération par rapport au boîtier de capteur (36).

4. Capteur selon la revendication 2 ou 3, **caractérisé en ce que** les moyens de butée (69) sont formés par des saillies dépassant dans l'évidement (44).

5. Capteur selon l'une des revendications 1 à 4, **caractérisé en ce que**, par coopération avec le boîtier de capteur (36), l'unité de blocage (37) est tenue sur celui-ci d'une manière évitant toute perte.

6. Capteur selon l'une des revendications 1 à 5, **caractérisé en ce que** l'évidement (44) présente une section de réception (76) recevant la partie de blocage (56) ainsi qu'une section de col (77) lui faisant suite, débouchant sur la face supérieure (42) du boîtier de capteur (36) et dans laquelle la partie d'actionnement (57) forme saillie, la section de col (77) présentant une section empêchant l'insertion de la partie de blocage (56) dans la direction de l'axe de hauteur (52), qui est en plus conformée de telle sorte que la partie d'actionnement (57) s'y trouve prise dans la direction transversale du boîtier de capteur (36).

7. Capteur selon l'une des revendications 1 à 6, **caractérisé en ce que** la partie d'actionnement (57) s'engage par prise filetée de manière coaxiale dans la partie de blocage (56) et s'appuie avec sa face frontale (65) contre le fond de l'évidement (44), en traversant avantageusement la partie de blocage (56) de manière coaxiale avec une prise filetée.

8. Capteur selon l'une des revendications 1 à 7, **caractérisé en ce que** la partie d'actionnement (57) présente sur sa face frontale inférieure un évidement de palier (68) dans lequel s'enfonce un tenon support (67) placé sur le boîtier de capteur (36) et dépassant vers le haut, la partie d'actionnement (57) étant montée rotative sur le tenon support (67).

9. Capteur selon l'une des revendications 1 à 8, **caractérisé en ce qu'**à l'intérieur du boîtier de capteur (36) est logée une platine (34) portant les moyens capteurs (16) du capteur (2).

10. Capteur selon la revendication 9, **caractérisé en ce que** la platine (34) est orientée verticalement, son plan de platine s'étendant à la fois dans la direction de l'axe longitudinal (47) et dans la direction de l'axe de hauteur (52) du boîtier de capteur (36).

11. Capteur selon la revendication 9 ou 10, **caractérisé en ce que** la platine (34) s'étend à travers la zone intermédiaire (78) située entre l'évidement (44) et la surface de soutien (54), en traversant avantageusement la zone intermédiaire (78) directement au-dessous du centre de la partie d'actionnement (57).

12. Capteur selon la revendication 11, **caractérisé en ce que** la platine (34) présente deux sections d'extrémité de platine (82, 83) placées de part et d'autre de l'évidement (44) dans la direction longitudinale du boîtier de capteur (36), sections qui sont reliées entre elles par une section de barre de platine (84) traversant la zone intermédiaire (78), la section de barre de platine (84) possédant, dans la direction de l'axe de hauteur (52), une extension moindre qu'au moins l'une et avantageusement les deux sections d'extrémité de platine (82, 83).

13. Capteur selon la revendication 12, **caractérisé en ce que** l'une ou les deux sections d'extrémité de platine (82, 83) dépassent suffisamment vers le haut pour flanquer l'évidemment (44) dans la direction longitudinale du boîtier de capteur (36).

14. Capteur selon la revendication 12 ou 13, **caractérisé en ce que** l'une des sections d'extrémité de platine (82) porte les moyens capteurs (16), qui sont reliés par des pistes conductrices (33) s'étendant sur la section de barre de platine (84) avec des contacts de raccordement (35) prévus sur l'autre section d'extrémité de platine (83), contacts sur lesquels sont raccordés des conducteurs électriques (32) partant vers l'extérieur.

15. Capteur selon l'une des revendications 9 à 14, **caractérisé en ce que** le boîtier de capteur (36) présente un corps principal de boîtier (85) de type capot, qui reçoit la platine (34) et les composants (16, 35) placés dessus et qui est rempli avec une masse coulée (88) durcie entourant la platine (34), la platine (34) étant tenue dans le corps principal de boîtier (85) de manière avantageuse par des moyens de crantage (87).

16. Capteur selon l'une des revendications 1 à 15, **caractérisé en ce que** les moyens de capteur (16) du capteur (2) contiennent au moins un commutateur à lames ou des moyens capteurs magnétorésistifs.

17. Dispositif de travail avec un instrument de travail (3) qui présente deux composants d'appareil (4, 5) mobiles l'un par rapport à l'autre, dont le premier composant d'appareil (4) présente au moins une rainure d'ancrage (17) en contre-dépouille en forme de gradin, dans laquelle au moins un capteur (2) conformé selon l'une des revendications 1 à 16 est fixé de manière amovible, l'autre composant d'appareil (5) portant au moins un élément d'actionnement convenant pour actionner sans contact le capteur (2).

18. Dispositif de travail selon la revendication 17, **caractérisé en ce que** l'appareil de travail (3) est un entraînement linéaire mû par un fluide.
